# EUROPEAN PATENT APPLICATION

(11) **EP 1 912 319 A1**
(43) Date of publication of application: **16.04.2008**
(21) Application number: 06781678.5
(22) Date of filing: 26.07.2006
(51) Int. Cl.: H02K 35/02, F02G 1/053, H02K 33/16

(54) **OUTER STATOR FOR RECIPROCATING CYCLE ENGINE, AND RECIPROCATING CYCLE ENGINE**

(30) Priority: 29.07.2005 JP 2005221744
(71) Applicant: Mitsubishi Materials PMG Corporation, Niigata-shi, Niigata 950-8640 (JP)
(72) Inventor: MIYAHARA, Masahisa, MITSUBISHI MATERIALS CORP., Niigata-shi, Niigata 950-8640 (JP); KANAGAWA, Kinji, MITSUBISHI MATERIALS CORPORATION, Saitama-shi, Saitama 330-8508 (JP)
(74) Representative: HOFFMANN EITLE
(86) International application number: PCT/JP2006/314766
(87) International publication number: WO 2007/013506

(57) **Abstract**

An outer stator of a reciprocating engine, that is provided in a reciprocating engine together with an inner stator and a mover, that has a cylindrical shape and is placed around the mover coaxially with an axis of the mover, and that forms a magnetic path between itself and the inner stator via a field magnet of the mover, the outer stator of the reciprocating engine includes: an aperture portion that is formed in an inner circumferential surface thereof that faces the mover; an internal space that opens via the aperture portion, and in which a wound wire coil is placed; and undercut portions that, in a cross section including the axis, are provided at both end positions along the axis, and that are recessed from the inner circumferential surface towards the outer side in a radial direction.

## Description

### TECHNICAL FIELD

The present invention relates to an outer stator for a reciprocating engine and to a reciprocating engine. Priority is claimed on Japanese Patent Application No. 2005-221744, filed July 29, 2005, the contents of which are incorporated herein by reference.

### BACKGROUND OF THE INVENTION

Conventionally, reciprocating engines are used in driving apparatuses and electrical generators and the like. For example, the Stirling cycle engine illustrated in Patent document 1 described below is known as an example of the driving apparatus.

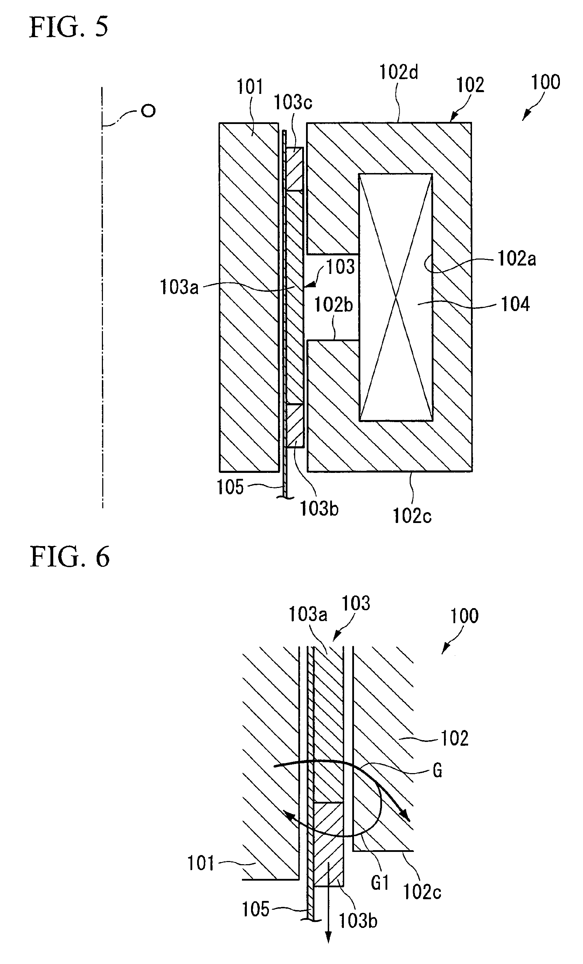

A structure such as that shown in FIG. 5 is known as a reciprocating engine 100 which is used in an electrical generator. Namely, a mover 103 and an outer stator 102 that are each formed in a cylindrical shape are fitted coaxially around a toroidal or columnar inner stator 101. An internal space 102a that opens via an aperture portion 102b which is formed in an inner circumferential surface of the outer stator 102 is formed in the outer stator 102. A wound wire coil 104 is provided in the internal space 102a, and the mover 103 is able to move reciprocatingly along the direction of the axis O thereof. A magnetic path that is continuous via a field magnet portion 103a of the mover 103 is formed inside the outer stator 102 and the inner stator 101.

A field magnet portion 103a and a first restoring magnet portion 103b and a second restoring magnet portion 103c that are connected to both end portions in the direction of the axis O of the field magnet portion 103a are provided in the mover 103. When the mover 103 is positioned at a stroke end, if the first restoring magnet portion 103b and the second restoring magnet portion 103c then generate restoring force in the opposite direction from the movement direction thereof, the mover 103 is prevented from moving away from between the inner stator 101 and the outer stator 102.

The magnetic field direction of the field magnet portion 103a is towards the outer side in the radial direction, namely, towards the outer stator 102, while the magnetic field direction of the first restoring magnet portion 103b and the second restoring magnet portion 103c is towards the inner side in the radial direction, namely, towards the inner stator 101. The inner circumferential surface of the mover 103 is supported on an outer circumferential surface of a metal tube 105 that is formed, for example, from stainless steel.
Patent document 1: Japanese Unexamined Patent Application, First Publication No. 2004-293829

### DISCLOSURE OF THE INVENTION

### PROBLEMS TO BE SOLVED BY THE INVENTION

In the conventional reciprocating engine 100, when the mover 103 is moved along the direction of the axis O thereof such that the first restoring magnet portion 103b approaches a first end surface 102c of the outer stator 102, and such that the second restoring magnet portion 103c moves away from a second end surface 102d of the outer stator 102, namely, when the mover 103 is moved in a direction heading from the second restoring magnet portion 103c towards the first restoring magnet portion 103b, then at the stroke end of the mover 103 where the load on the reciprocating engine 100 is the maximum, the first restoring magnet portion 103b and the first end surface 102c of the outer stator 102 face each other. In the same way, when the mover 103 is moved along the direction of the axis O thereof such that the second restoring magnet portion 103c approaches the second end surface 102d of the outer stator 102, and such that the first restoring magnet portion 103b moves away from the first end surface 102c of the outer stator 102, namely, when the mover 103 has moved in a direction heading from the first restoring magnet portion 103b towards the second restoring magnet portion 103c, then at the stroke end of the mover 103 where the load on the reciprocating engine 100 is the maximum, the second restoring magnet portion 103c and the second end surface 102d of the outer stator 102 face each other.

As is shown in FIG 6, at the stroke end position of the mover 103 where the load on the reciprocating engine 100 is the maximum, a magnetic path G is generated that is continuous from the interior of the inner stator 101 via the field magnet portion 103a towards the outer circumferential portion of the interior of the outer stator 102. Because a leakage magnetic path G1 is generated in a portion of this magnetic path G that flows via the first restoring magnet portion 103b and the second restoring magnet portion 103c towards the inner stator 101, the problem exists that it is difficult to achieve any further improvement in the output of the reciprocating engine 100.

### MEANS FOR SOLVING THE PROBLEM

The present invention was conceived in view of the above described circumstances, and has an object of providing an outer stator for a reciprocating engine and a reciprocating engine that enables further improvement in output.

In order to solve the above described problems and achieve the above described object, the outer stator of a reciprocating engine of the present invention is an outer stator of a reciprocating engine, that is provided in a reciprocating engine together with an inner stator and a mover, that has a cylindrical shape and is placed around the mover coaxially with the axis of the mover, and that forms a magnetic path between itself and the inner stator via a field magnet of the mover, wherein the outer stator of the reciprocating engine is provided with: an aperture portion that is formed in an inner circumferential surface of the outer stator that faces the mover; an internal space that opens via the aperture portion, and in which a wound wire coil is placed; and undercut portions that, in a cross section including the axis, are provided at both end positions along the axis, and that are recessed from the inner circumferential surface towards the outer side in the radial direction.

The reciprocating engine of the present invention is a reciprocating engine that is provided with: an inner stator having an axis; a mover that is placed coaxially around the inner stator, and that moves reciprocatingly along the axis; and the outer stator of a reciprocating engine that is placed coaxially around the mover, wherein the mover has: a field magnet portion; and restoring magnet portions that are provided respectively at both end positions along the axis of the field magnet portion, and wherein the respective restoring magnet portions are each positioned such that, when the mover arrives at a stroke end position where the load on the reciprocating engine is at maximum, they face the undercut portions.

In these inventions, in the reciprocating engine in which the above described outer stator is provided, because a structure is employed in which the outer circumferential surfaces of the restoring magnet portions face the undercut portions when the mover arrives at the stroke end, it is possible to prevent the restoring magnet portions facing the inner circumferential surface of the outer stator while being adjacent thereto at the stroke end position.

Accordingly, it is possible to suppress the generation of a leakage magnetic path in which, when the mover reaches the stroke end position, a portion of a magnetic path that is continuous from the inner stator towards the outer circumferential portion side of the outer stator via the field magnet portion flows via the restoring magnet portions towards the inner stator, and it is possible to achieve an improvement in the output of the reciprocating engine.

Moreover, because the generation of a leakage magnetic path is suppressed not by reducing the size in the axial direction of the outer stator, but by forming the undercut portions, it is possible to achieve the above described operating effects in a state in which the strength of the magnetic field generated by the reciprocating engine that is provided with this outer stator is maintained, and it is possible to ensure that an improvement in the output from the reciprocating engine is achieved.

It is preferable for the outer stator to be further provided with an expanding space portion between the aperture portion and the internal space, the expanding space portion spreading from the aperture portion towards the internal space portion when the expanding space portion is seen in the cross section.

In this case, it is possible, while keeping the external dimensions of the outer stator constant, to limit the decrease in the volume thereof to a minimum at the same time as the internal space is enlarged. Accordingly, it is possible to increase the capacity of the wound wire coil that is placed in this internal space, and it is possible to obtain a further improvement in the output from the reciprocating engine in which this outer stator is provided.

### EFFECTS OF THE INVENTION

According to the outer stator for a reciprocating engine and reciprocating engine of the present invention, it is possible to suppress the generation of leakage magnetic paths, and achieve an improvement in the output thereof.

### BRIEF DESCRIPTION OF THE DRAWINGS

FIG. 1 is a partial cross-sectional view showing a reciprocating engine illustrating a first embodiment of the present invention.
FIG. 2 is a partially enlarged view showing the reciprocating engine shown in FIG. 1, and showing a state in which a load on the reciprocating engine is at the maximum, namely, a state in which the mover is positioned at an end of the stroke of the mover.
FIG 3 is a partially enlarged view showing a reciprocating engine illustrating a second embodiment of the present invention, and showings a state in which a load on the reciprocating engine is at the maximum, namely, a state in which the mover is positioned at an end of the stroke of the mover.
FIG. 4 is a graph showing the results when operating effects of the outer stator of the reciprocating engine illustrating an embodiment of the present invention were verified.
FIG. 5 is a partial cross-sectional view showing a conventional example of the reciprocating engine of the present invention.
FIG 6 is a partially enlarged view showing the reciprocating engine shown in FIG 5, and showing a state in which a load on the reciprocating engine is at the maximum, namely, a state in which the mover is positioned at an end of the stroke of the mover.

### DESCRIPTION OF THE PREFERRED EMBODIMENTS

Embodiments of this invention will be described below with reference to the drawings.

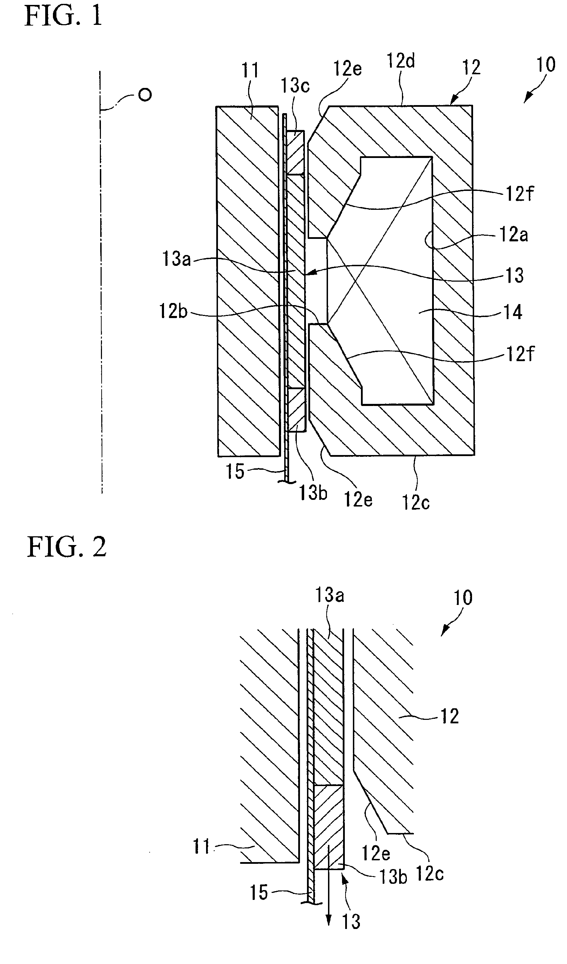

Firstly, the schematic structure of a reciprocating engine 10 in which the outer stator according to the present embodiment is provided will be described. This reciprocating engine 10 is used in a variety of types of electrical generator and has the structure shown in FIG 1. Namely, a mover 13 and an outer stator 12 that are each formed in a cylindrical shape are fitted in this sequence from an inner side in the radial direction towards an outer side thereof coaxially around a toroidal or columnar inner stator 11. Namely, an outer circumferential surface of the mover 13 and an inner circumferential surface of the outer stator 12 face each other, and an inner circumferential surface of the mover 13 and an outer circumferential surface of the inner stator 11 are positioned so as to face each other via a metal tube 15 (described below). In other words, the outer stator 12 is fitted around the inner stator 11 with a cylindrical space formed between them, and the cylindrical mover 13 is placed within this cylindrical space such that it can move reciprocatingly along the axis O thereof.

The outer stator 12 is formed, for example, by stacking a plurality of steel plates in the circumferential direction thereof, or is formed by a sintered body that is made up of a compound soft magnetic material. If the former (i.e., a steel plate body) is used, then the steel plates of the portion that constitutes the inner of the outer stator 12 have a smaller thickness than the steel plates of the portion that constitutes the outer thereof. If the latter (i.e., compound soft magnetic material) is used, then it is manufactured by compaction molding a metal powder which is coated with an electrically non-conductive material such as a thermosetting resin or the like into a predetermined configuration, and then performing heat processing in order, if necessary, to perform annealing to eliminate distortion, or to thermoset the non-conductive material, or to improve the strength of the materials and the like.

As the metal powder it is possible to use an iron powder such as pure iron powder, a Fe-Si based iron-base soft magnetic alloy powder that contains 0.1 to 10 percent by weight of silicon (Si) and in which the remainder is made up of iron and unavoidable impurities (for example, an Fe - 3% Si powder), a Fe-Si-Al based iron-base soft magnetic alloy powder that contains 0.1 to 10 percent by weight of silicon (Si), 0.1 to 20 percent by weight of Aluminum (Al), and in which the remainder is made up of iron and unavoidable impurities (for example, Sendust powder having a composition made up of Fe - 9% Si - 5% Al), a Fe-Al based iron-base soft magnetic alloy powder that contains 0.1 to 20 percent by weight of Aluminum (Al) and in which the remainder is made up of iron and unavoidable impurities (for example, Alperm powder having a composition made up of Fe -16% Al), a Fe-Cr based iron-base soft magnetic alloy powder that contains 1 to 20 percent by weight of chromium (Cr), and, depending on requirements, contains at least one of not more than 5 percent by weight of Al and not more than 5 percent by weight of Si, and in which the remainder is made up of iron and unavoidable impurities, a nickel-base soft magnetic alloy powder that contains 35 to 85 percent by weight of nickel (Ni), and, depending on requirements, contains at least one of not more than 5 percent by weight of molybdenum (Mo), not more than 5 percent by weight of copper (Cu), not more than 2 percent by weight of Cr, and not more than 0.5 percent by weight of manganese (Mn), and in which the remainder is made up of iron and unavoidable impurities, and a Fe-Co-V based iron-base soft magnetic alloy powder that contains 0.1 to 52 percent by weight of cobalt (Co) and 0.1 to 3 percent by weight of Vanadium (V) and in which the remainder is made up of iron and unavoidable impurities.

As the non-conductive material that covers the metal powder, either an organic non-conductive material or an inorganic non-conductive material, or a mixed material made up of a mixture of an organic non-conductive material and an inorganic non-conductive material is used. As the organic non-conductive material it is possible to use epoxy resin, fluorine resin, phenol resin, urethane resin, silicone resin, polyester resin, phenoxy resin, urea resin, isocyanate resin, acrylic resin, and polyimide resin and the like. As the inorganic non-conductive material it is possible to use phosphates such as iron phosphate, various types of glass non-conductive materials, water glass containing sodium silicate as its primary constituent, and non-conductive oxides.

The mover 13 of the present embodiment is provided with a field magnet portion 13a, and a first restoring magnet portion 13b and a second restoring magnet portion 13c that are joined to both end portions in the direction of the axis O of the field magnet portion 13a. The mover 13 is supported at the inner circumferential thereof on an outer circumferential surface of the metal tube 15 that is formed, for example, from stainless steel.

An internal space 12a that opens via an aperture portion 12b which is formed in an inner circumferential surface of the outer stator 12 is formed in the outer stator 12. A wound wire coil 14 is provided in this internal space 12a. The length along the axis O of the internal space 12a is longer than that of the aperture portion 12b. Positions of center portions of each of the outer stator 12, the internal space 12a, and the aperture portion 12b along the axis O substantially match each other.

In the above described structure, the mover 13 is able to move reciprocatingly along the axis O thereof between the inner stator 11 and the outer stator 12. A magnetic path that is continuous via the field magnet portion 13a is formed inside the outer stator 12 and the inner stator 11.

When the outer stator 12 of the present embodiment is seen in the cross section including the axis O, it can be seen that undercut portions 12e that are recessed from the inner circumferential surface towards the outer in the radial direction, and that are joined respectively to the first end surface 12c and the second end surface 12d of the outer stator 12 are provided at both end portions in the direction of the axis O. The undercut portions 12e shown in the drawings are formed as sloping surfaces that slope towards the outer in the radial direction as they move from the inner circumferential surface of the outer stator 12 towards the first end surface 12c and the second end surface 12d, namely, are formed as chamfered surfaces.

When the outer stator 12 is seen in the cross section including the axis O, it can be seen that an expanding portion 12f is provided between the aperture portion 12b and the inner portion 12a which expands from the aperture portion towards the internal space.

In the above described structure, the mover 13 moves along the axis O thereof such that one of the first restoring magnet portion 13b and the second restoring magnet portion 13c approaches one of the first end surface 12c and the second end surface 12d of the outer stator 12, and such that the other of the second restoring magnet portion 13c and the first restoring magnet portion 13b moves away from the other of the second end surface 12d and the first end surface 12c of the outer stator 12, and at the stroke end position of the mover 13 where the load on the reciprocating engine 10 is the maximum, the outer circumferential surface of one of the first restoring magnet portion 13b and the second restoring magnet portion 13c faces either one of the undercut portions 12e.

Namely, in FIG. 1 and FIG 2, the bottom restoring magnet portion (i.e., the first restoring magnet portion) 13b faces the bottom undercut portion 12e at the stroke end position when the mover 13 is moved to the bottom along the axis O thereof such that the bottom restoring magnet portion 13b which is located on the bottom side in the direction of the axis O approaches the bottom end surface (i.e., the first end surface) 12c which is located on the bottom side in the Direction of the axis O of the outer stator 12, and such that the top restoring magnet portion (i.e., the second restoring magnet portion) 13c which is located on the top side in the Direction of the axis O moves away from the top end surface (i.e., the second end surface) 12d which is located on the top side in the Direction of the axis O of the outer stator 12. Namely, the joint portion between the field magnet portion 13a and the bottom restoring magnet portion 13b reaches as far as the position of the bottom undercut portion 12e in the direction of the axis O.

Conversely to this, the top restoring magnet portion 13c faces the top undercut portion 12e at the stroke end position when the mover 13 is moved to the top in the Direction of the axis O thereof such that the top restoring magnet portion 13c approaches the top end surface 12d of the outer stator 12, and such that the bottom restoring magnet portion 13b moves away from the bottom end surface 12c of the outer stator 12. Namely, the joint portion between the field magnet portion 13a and the top restoring magnet portion 13c reaches as far as the position of the top undercut portion 12e in the direction of the axis O.

The length along the axis O of the field magnet portion 13a is approximately 40 mm, while the length along the axis O of the respective restoring magnet portions 13b and 13c is approximately 8 mm, and the thickness of the field magnet portion 13a and the restoring magnet portions 13b and 13c is approximately 3.5 mm. The distance between the two end surfaces 12c and 12d of the outer stator 12 is approximately 65 mm, while the length along the axis O of the undercut portions 12e and 12e is not less than 2 mm, and the length thereof in the radial direction (i.e., the depth thereof) is not less than 2 mm. The mover 13 moves reciprocatingly 10 mm either upwards or downwards in FIG. 1 and FIG 2 along the axis O thereof.

As has been described above, according to the reciprocating engine 10 of the present embodiment, at the stroke end position of the mover 13, because a structure is employed in which the outer circumferential surfaces of the restoring magnet portions 13b and 13c face the undercut portions 12e, it is possible to prevent the above described one of the restoring magnet portions 13b and 13c facing the inner circumferential surface of the outer stator 12 while being adjacent thereto at the stroke end position.

Accordingly, it is possible to suppress the generation of a leakage magnetic path in which, when the mover 13 reaches the stroke end, a portion of a magnetic path that is continuous from the inner stator 11 towards the outer circumferential portion of the outer stator 12 via the field magnet portion 13a flows via one of the restoring magnet portions 13b and 13c towards the inner stator 11, and it is possible to achieve an improvement in the output of the reciprocating engine 10.

Moreover, because the generation of a leakage magnetic path is suppressed not by reducing the size along the axis O of the outer stator 12, but by forming the undercut portions 12e, it is possible to achieve the above described operating effects in a state in which the strength of the magnetic field generated by the reciprocating engine 10 that is provided with the outer stator 12 is maintained, and it is possible to ensure that an improvement in the output from the reciprocating engine 10 is achieved.

In the outer stator 12, in the expanding portion 12f to the aperture portion 12b of the internal space 12a, because the size of the aperture along the axis O spreads gradually larger outwards in the radial direction of the outer stator 12, it is possible, while keeping the size of the outer stator 12 constant, to restrict the decrease in the volume thereof to a minimum at the same time as the internal space 12a is enlarged. Accordingly, it is possible to increase the capacity of the wound wire coil 14 that is placed in this internal space 12a, and it is possible to obtain a further improvement in the output from the reciprocating engine 10 in which this outer stator 12 is provided.

Note that the technological range of the present invention is not limited to the above described embodiment and various modifications can be made insofar as they do not depart from the spirit or scope of the present invention.

For example, in the above described embodiment, a structure is shown in which the aperture size in the direction of the axis O of the expanding portion 12f to the aperture portion 12b of the internal space 12a spreads gradually outwards in the radial direction of the outer stator 12, however, it is also possible to employ a structure in which the expanding portion 12f having a sloping configuration is not provided, and the entire aperture portion 12b has the same aperture size. In the expanding portion 12f, a structure is shown in which the aperture size in the direction of the axis O spreads gradually and continuously outwards in the radial direction, however, instead of this it is also possible to employ a structure in which the aperture size in the direction of the axis O is increased in a step form.

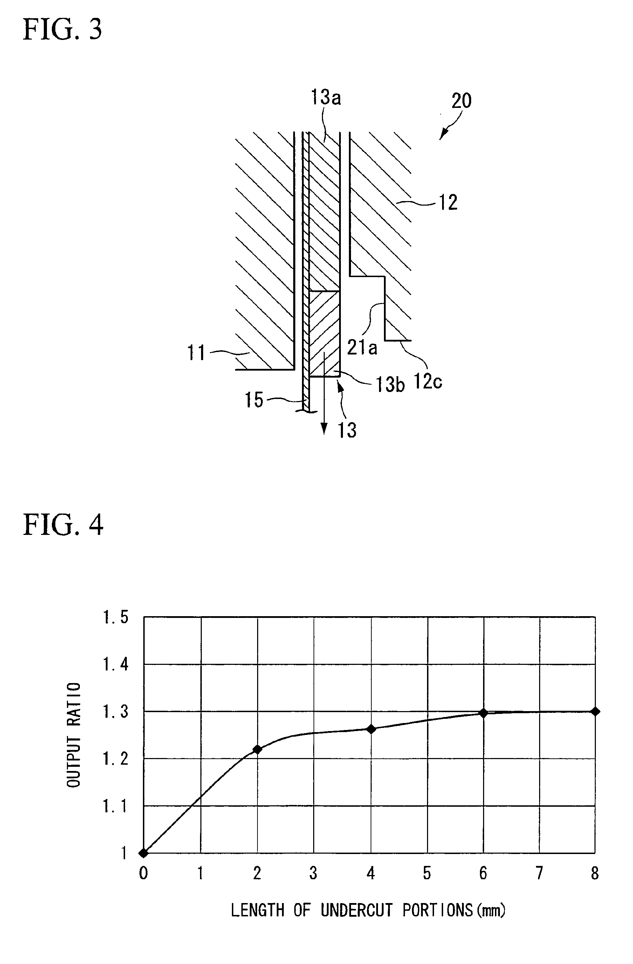

A structure is shown in which the undercut portions 12e of the present embodiment are formed as sloping surfaces that slope towards the outer side in the radial direction as they move from the inner circumferential surface of the outer stator 12 towards the respective end surfaces 12c and 12d, namely, are formed as chamfered surfaces, however, instead of this, it is also possible to employ undercut portions 21a that are recessed towards the outer side in a radial direction which is perpendicular to the inner circumferential surface of the outer stator 12 such as is shown in FIG. 3.

Here, a simulation experiment was performed in order to verify the above described operating effects. A plurality of reciprocating engines 20 that were provided with the outer stator 12 having the undercut portion 21a shown in FIG. 3 and in which the dimensions of the above described respective portions as well as the size in the radial direction of the undercut portion 2 1 a were all the same (approximately 3 mm), but in which the size in the direction of the axis O of the undercut portion 2 1 a was varied were employed as experiment models. In FIG. 4, if the output when the undercut portion 21a is not provided is taken as 1, the output ratio represents the respective output ratios when the size of the undercut portion 21 a in the direction of the axis O is altered.

As a result, as is shown in FIG 4, when the distance between the two end surfaces 12c and 12d of the outer stator 12 was 65mm, the size in the direction of the axis O of the field magnet 13a was 40 mm, and the stroke amount in the direction of the axis O of the mover 13 was 10 mm both upwards and downwards in FIG 1 and FIG 3, if the size of the undercut portion 21a was not less than 2 mm, it was confirmed that the above-mentioned operations and advantageous can be obtained.

### INDUSTRIAL APPLICABILITY

In an outer stator for a reciprocating engine and a reciprocating engine, it is possible to achieve an improvement in output.

## Claims

1. An outer stator of a reciprocating engine, that is provided in a reciprocating engine together with an inner stator and a mover, that has a cylindrical shape and is placed around the mover coaxially with an axis of the mover, and that forms a magnetic path between itself and the inner stator via a field magnet of the mover, the outer stator of the reciprocating engine comprising:
an aperture portion that is formed in an inner circumferential surface thereof that faces the mover;
an internal space that opens via the aperture portion, and in which a wound wire coil is placed; and
undercut portions that, in a cross section including the axis, are provided at both end positions along the axis, and that are recessed from the inner circumferential surface towards the outer side in a radial direction.

2. The outer stator of a reciprocating engine according to Claim 1, further comprising an expanding space portion between the aperture portion and the internal space, the expanding space portion spreading from the aperture portion towards the internal space portion when the expanding space portion is seen in the cross section.

3. A reciprocating engine comprising:
an inner stator having an axis;
a mover that is placed coaxially around the inner stator, and that moves reciprocatingly along the axis; and
the outer stator of a reciprocating engine according to Claim 1 that is placed coaxially around the mover, wherein
the mover has: a field magnet portion; and restoring magnet portions that are provided respectively at both end positions along the axis of the field magnet portion, and wherein
the respective restoring magnet portions are each positioned such that, when the mover arrives at a stroke end position where a load on the reciprocating engine is at maximum, they face the undercut portions.

4. The reciprocating engine according to Claim 3, wherein
the outer stator is further provided with an expanding space portion between the aperture portion and the internal space, the expanding space portion spreading from the aperture portion towards the internal space portion when the expanding space portion is seen in the cross section.
